# EUROPEAN PATENT APPLICATION

(11) **EP 4 124 604 A1**
(43) Date of publication of application: **01.02.2023**
(21) Application number: 21187626.3
(22) Date of filing: 26.07.2021
(51) Int. Cl.: C03B 5/225, C03B 5/235, C03B 5/18, C03B 5/193, C03C 1/00

(54) **METHOD OF ADDING CULLET MATERIAL INTO A MOLTEN GLASS STREAM AND MOLTEN GLASS STREAM FEEDER**

(71) Applicant: Stoelzle Oberglas GmbH, 8580 Köflach (AT)
(72) Inventor: ZWETTLER, Niklas, 8572 Bärnbach (AT); LENK, Wilfried, 8580 Köflach (AT); CLAYTON, Stephen, Leeds, North Yorkshire, LS255EB (GB)
(74) Representative: Leinweber & Zimmermann

(57) **Abstract**

The invention relates to a method of adding cullet material to a molten glass stream, wherein the molten glass stream is channeled and receives the added cullet material after flowing through an upstream channel portion with a set volume flow rate, the molten glass stream containing added cullet material flowing with a surface level through a downstream channel portion towards its further processing, whereby the cullet material is added in solid state when entering the molten glass stream, heating energy to contribute to the melting of the cullet material is input in the downstream channel portion, and a flow velocity increase caused by a raised channel ground in the downstream channel portion with respect to the upstream channel portion, said raise being provided to force bubbles present in the molten glass stream closer to the surface level, is counteracted by a channel width increase in the downstream channel portion with respect to the upstream channel portion.

## Description

The invention relates to a method of adding cullet material to a molten glass stream, wherein the molten glass stream is channeled and receives the added cullet material after flowing through an upstream channel portion with set volume flow rate, the molten glass stream containing added cullet material flowing with a surface level through a downstream channel portion towards its further processing.

Those methods are well known in the field of glass manufacturing.

Namely, in glass manufacturing, a more complex situation arises if not only clear glass containers/products (glassware) are produced, but also colored glass containers/products are to be produced in the same plant or production line. Since the adding of f.i. color concentrate to provide for production of colored glass should not be made in the main glass melting furnace for clear glass, one can either provide for a separate glass melting furnace for the respective colored glass, or branch off a part of the molten clear glass stream provided by the melting furnace and to add the color concentrate in a separate stream line, f.i. in a forehearth region of this production line.

Clear glass not consumed in the clear glass stream production line for such or similar arrangements is easily recoverable by just collecting such clear cullet material and adding it into the melt in the clear glass melting furnace. Unless there is a separate melting furnace for colored cullet material, this way of recovering waste production in terms of colored cullet material is not available. In order to cope with this problem, different methods of adding (colored) cullet material to a molten (clear) glass stream have been proposed, in particular also methods where such added cullet acts as a colorant.

For instance, EP 2 647 602 A1 discloses, as prior art and with reference to Fig. 8 of this document the provision of a molten glass stream which is mixed in a mixing chamber with melted glass coming from another melting chamber. This configuration is not only suitable for adding colored cullet material, but also to use the additional melting chamber in order to control the composition of the glass coming from the (main) melting furnace, such as to change glass stream characteristics after mixing.

In EP 2 647 602 A1, some problems are indicated using the additional melting chamber, and a different arrangement is proposed to provide for a molten glass stream addition to the (main) clear molten glass stream. In order to overcome the addressed problem, EP 2 647 602 A1 proposes to provide a ceiling protrusion, gaining space height beyond the sealing wall of the forehearth, and to provide an oxygen combustion burner injecting its flame downward, while the additive is supplied by pneumatic or mechanical transportation from a supply channel into the flame, wherein the oxygen combustion burner may also be replaced by a multi-phase arc plasma generation apparatus. By the heat of the combustion burner/plasma generation apparatus, cullet material is provided in form of completely melted particles heated at high temperature, which then descend, land on and are added to the glass melt flowing at the bottom of the forehearth.

It is an object of the subject invention to further improve a method as initially introduced for a good combination of efficiency and simplicity of the underlying glass manufacturing.

To this end, the invention provides a method as initially introduced, which is essentially characterized in that the cullet material is added in solid state when entering the molten glass stream, heating energy to contribute to the melting of the cullet material is input in the downstream channel portion, and a flow velocity increase caused by a raised channel ground in the downstream channel portion with respect to the upstream channel portion, said raise being provided to force bubbles present in the molten glass stream closer to the surface level, is counteracted by a channel width increase in the downstream channel portion with respect to the upstream channel portion.

Accordingly, the subject invention provides a simplification of the process in that the cullet material is added in solid state when entering the molten glass stream, while compensating against negative effects provided by bubble generation and its interaction with temporary viscosity modification caused by the entering of the cullet material in solid state by channel geometry. Namely, bubbles generated are forced closer to the surface level by the provided channel ground raising, and the effect thereof on the flow velocity is counteracted by the channel width increase, such as to counteract also a lower dwelling time of the molten glass stream in said channel portion, favoring the action of the heating energy input in said channel portion and contributing to the melting of the cullet material.

Thereby, a reliable melting of the cullet material added in solid state can be reached with acceptable impact on the production line, respectively properties of the glass stream. This is surprising, since there is clear understanding that cullet has to be added in molten form into channelled glass streams due to the conditions to be kept thereafter. By the invention, colored cullet material can be recovered within the glass production line in a simple and efficient manner.

Preferably, the molten glass stream in the upstream channel portion is of clear molten glass, said upstream channel portion being connected with its upstream side with a glass melting furnace melting clear glass. Moreover, the added cullet material comprises or consists of colored glass within one purpose of the invention, namely recycling use of recovered colored cullet material in particular from said very production line, another production line connected to said melting furnace and/or recovered within the same glass production plant. There may be no particular focus on the color-property of the final molten glass stream containing the cullet material after its melting within the glass stream. However, if there is interest in such color-property, (separate) adding of coloring agents can be additionally provided to adjust the final color-property to a predetermined one. In a preferred embodiment, there is no separate color adjustment or even addition apart from that by the cullet material itself.

In a preferred embodiment, the channel ground raise is, with respect to the surface flow level over ground in the upstream portion, more than 12%, preferably more than 20%, in particular more than 28%. However, it can also be larger than 33%, in particular larger than 40%. Since some thermal energy is withdrawn from the molten glass stream by production of the relatively colder cullet, and gas in the form of bubbles below a layer of relatively higher viscose melt on top of the channel, said colder layer having a higher density and, thus, tends to sink, and to thereby introduce the entrapped bubbles to the whole glass stream, in particular also close to the ground, said even higher channel ground raise brings such bubbles in the molten glass stream even closer to the surface level.

Regarding the added cullet material, as already mentioned, it can result from processed post-consumer and/or post-industrial sources, in particular not limited to recovered material resulting from the same production line or plant.

In a preferred embodiment, a grain size of cullet particles is below 100 mm, in particular below 70 mm. In an even more preferred embodiment, the grain size is below 50 mm, preferably below 40 mm in particular below 30 mm. Moreover the grain size is preferably higher than 0.3 mm, more preferable higher than 1 mm, in particular higher than 1.5 mm. This allows a good combination of reasonably short melting times with low level of preparatory treatment and/or dust issues.

In a further preferred embodiment, the method comprises the storing of the cullet material in solid state near the feeder entrance for the cullet material, that is the zone where the cullet material is added to the molten glass stream. The storing may be done in a cullet silo.

The method may also comprise pre-treatment steps for the cullet material to be added. These steps may contain washing steps, and/or a sieving of the cullet material to a desired grain grading. Such pre-treatment steps may depend on the desired quality of the final glass products manufactured under addition of the cullet material.

In some embodiments, the pre-treatment steps may also contain a pre-heating, that is, while in some embodiments the cullet material may be provided at room temperature, respectively the environment temperature, a pre-heating may take place by direct or indirect heating, f.i. for hot-feeder/waste gas, e.g. by a cyclone or other means of heating, as heat transfer applied to cullet in the silo and/or the transport system to the silo or from the silo to the entry zone. Such latter embodiments increase the energy efficiency of the process, in particular by using waste heat and in order to decrease the required primary heat source level for melting the cullet in the molten glass stream.

Within the method, it is preferred to add the cullet material evenly distributed over the channel width of the feeder. Addition of the cullet material may be via one or a plurality of openings, preferably at the beginning of a respective feeder channel unit. It can be by as such known means such as f.i. a vibrating chute or a moving charger.

It is preferred that the cullet material is added in a percentage of at least 2%, preferably at least 4%, in particular at least 10% to the molten glass stream (added material mass per unit time divided by mass of glass stream flow per unit time). It is even preferred to have additions of 15% or more, in particular 20% or more. On the other hand side, it is preferred that the addition is not more than 40%, preferably not more than 36%, in particular not more than 33%, in order to provide a reasonable working in the melting and fining zone of the feeder.

Turning back to the molten glass stream and the channel ground raising, it is preferred that there is a continuous crossover from the ground level of the upstream channel portion to the raised ground level. In particular, it is preferred to avoid the bridging of the whole ground level difference within a sharp step (90°) or even relatively sharp steps of 80° or higher, 70° or higher, or even 60° or higher. Most preferred are (average) ramp angle inclination of lower than 40°, preferably lower than 34°, in particular lower than 28°, even lower than 20°.

On the other hand, it is preferred that an average ramp angle is at least 2°, in particular at least 4°.

Regarding the channel width increase, it is preferred that the width increase is at least 15%, preferably at least 20%, in particular at least 30%. Moreover, said increase may be even larger than 40%, or even larger than 50%, also embodiments with 60% or more width increase are considered. Said width increase is given by the ratio of the difference between the channel width reached in the downstream channel portion to that of the upstream channel portion in relation to the channel width of the upstream channel portion.

On the other hand side, the channel-character of the feeder is kept and intermediate tanks are avoided. To this end, the width increase should not exceed 140%, preferably not exceed 132%, in particular not exceed 124%. Also, in some preferred embodiments avoided are accumulations where the glass stream flow is going to be dammed up creating zones with a flow velocity decrease of more than 90%, preferably more than 80%, in particular more than 70% of the flow velocity in the downstream channel portion. However, also batch production lines are envisaged by the subject invention.

In a preferred embodiment, the width increase is symmetrically divided on both lateral channel sides. In a further preferred embodiment, the channel width increase is continuous, with preferably an average inclination of not larger than 50%, preferably not larger than 42%, in particular not larger than 34%. However, even average inclinations of less than 27%, or less than 20% are taken in consideration. It is to be understood that, while linear ramps of constant inclination can be used, also other forms of widening/raising can be used, also in form of several segments with different angles.

It is preferred that the ratio l/Δh of the length of the raised channel ground to the raise of channel ground is at least 8, preferably at least 12, in particular at least 16. This ratio may even increase 20 or higher, also 24 or higher, and even 28 or higher.

In a further preferred embodiment, the channel ground raising and/or channel width increase may begin at the latest at the cullet addition zone, and the respective transition zone of increasing channel ground and/or width increase may overlap with the addition zone. This allows a simplified constructive realization of the feeder, in particular when having module-like structures and an opening in the channel lid/roof close to the beginning of a module of the feeder.

Further, it is preferred that a ratio w/l of the width and the length of the downstream channel portion is not larger than 48%, preferably not larger than 42%, in particular not larger than 36%.

Further, it is preferred that a ratio of channel ground raise to width of the downstream channel portion is preferably larger than 1/100, preferably than 1/75, in particular 1/50, and/or lower than 1/4, preferably than 1/5, in particular than 1/6.

Regarding the heating, it is preferred that a combustion space of a first heating arrangement to contribute to the melting of the solid state cullet material in the downstream per burner is larger than 0.001 m³, preferably larger than 0.005 m³, in particular larger than 0.04 m³ and/or lower than 0.1 m³, preferably lower than 0.8 m³, in particular lower than 0.6 m³, and the temperature in the combustion zone is in particular higher than 1200°, preferably higher than 1240°, in particular higher than 1280°.

The temperature may even be higher than 1300°, or even higher than 1330°. However, it is preferred that the fining zone temperatures are kept below 1420°, in particular 1400°.

The burners can be implemented as sidewall and/or top burners in sufficient number to provide the required thermal energy needed for the melting process. There may be further heating means (second heating system), extending in particular also into the upstream channel portion and/or also in subsequent downstream zones, for temperature control of the molten glass stream. That is, even if no or a very low quote of cullet material is added, the (second) heating system is applied for temperature control purpose as well as surface level control means. The channeling feeder with downstream channel portion can, thus, be a forehearth.

In a preferred embodiment, the surface level in the downstream level portion is controlled to a defined target surface level, in particular including feedback control. Control parameter of said control can be one or more of the group first heating system, second heating system, and the mixing quote (ratio added material to molten glass stream). However, in a preferred embodiment, the feedback control has the volume flow rate and the mixing rate as input parameter, and controls the system via temperature/cooling.

According to a further preferred realization, the molten glass stream goes through a stirring zone in a stirring channel portion downstream the downstream channel portion. In a further preferred embodiment, the glass stream passes a fining zone upstream the stirring zone, the fining zone comprising or being composed of the downstream channel portion. It may contain additional technologies to increase the fining quality, such as gas bubblers and/or or ultrasonic devices. These are preferably provided at least partly or completely in the first half of the fining bench.

In a further preferred realization, a cooling zone is provided after the fining zone. The cooling zone may (as well as the stirring zone), a channel structure with a channel width which may coincide with the channel width in the channel upstream portion. To this end, at the end of the downstream channel portion, the width may again decrease, in particular to the initial width, and also the raised ground level may descend again, in particular to the initial ground level. The ground level decrease may start upstream the width decrease, and/or the width decrease may end downstream the ground level decrease.

In a preferred embodiment, the residence time of a volume element of the molten glass stream is 50 min or more, preferably 60 min or more, more preferably 70 min or more, in particular 80 min or more, and/or 110 min or less, preferably 100 min or less. These residence or dwelling times refer in particular to the melting and fining zone, and in particular to the downstream channel portion.

Moreover, in said downstream channel portion, the temperature is larger than 1200°, preferably larger than 1250°, more preferably larger than 1300°, in particular larger than 1350°, and preferably does not exceed 1400°.

A residence time in the cooling zone should be more than 5 min, preferably more than 10 min, even more than 20 min, in particular more than 30 min. However, it is preferred that this time does not exceed 90 min. The cooling zone may comprise cooling means, as cooled wall portion, in particular also openings (air-cooling) beyond the surface level of the stream. The cooling means are preferably settable, f.i. by variable opening level.

Further, the invention provides a molten glass stream feeder having a geometry configured to provide for a method according to one or more of the method aspects.

That is, the feeder has an upstream channel portion and a downstream channel portion with a cullet insert zone inbetween, heating means to contribute to the melting of the cullet material in the downstream channel portion, and a raised channel ground in the downstream channel portion with respect to the upstream channel portion, to force bubbles present in the molten glass stream closer to the surface level, and a channel width increase in the downstream channel portion with respect to the upstream channel portion to counteract a flow velocity increase caused by said raised channel ground.

Aspects, in particular geometric aspects of the molten glass stream feeder, in particular the downstream channel portion, respectively melting and fining zone thereof, can be taken from the respective descriptions of the method above.

Further, the invention provides a glass manufacturing system having a molten glass stream feeder in accordance with any of these aspects, a melting furnace covered to the upstream channel portion of the feeder, a cullet material delivery device for providing cullet material in solid state form, and a controlled control system to perform a method according to any of the precedingly discussed aspects, in particular by keeping the molten glass stream in the upstream channel portion with a set volume flow rate, and the surface level of the molten glass stream containing added cullet material at a controlled surface level.

The feeder having the downstream channel portion and possibly other of the above-mentioned zones is preferably of topologically tubular form, and may have rectangular cross-sections, but is, however, not limited thereto.

Regarding the burners and the fuel (gas) for the burners, there is no particular limit, however, fuel gases as propane, butane, methane, LPG, hydrogen are preferred.

The composition of the molten glass stream is not particularly limited. For instance, it could be any of soda lime glass, mixed alkali-type glass, borosilicate glass, and alkali-free glass, even other more rare or mixed type glass could be used. For some examples of suitable glass compositions, reference is made to [0076] to [0079] of EP 2 647 602 A1, incorporated by reference. Preferably, the added cullet material is completely in solid state, and not even partly molten.

In some embodiments, the cullet entry zone may be used to add other components than cullet to the molten glass stream. Apart from already mentioned colorants, a refining agent, a melting-resisting agent, an opacifying agent or other can be added.

An exit zone/spout downstream the stirring zone is usually depending on the kind of selected glass product/process line design.

Further features, details and advantages of the invention become apparent from the subsequent description with reference to the figures, wherein
Figure 1 shows schematically a glass stream flow arrangement in a perspective view,
Figure 2 schematically shows in a side/cross-sectional view a melting and fining zone of the arrangement,
Figures 3a and 3b show schematically two embodiments of evenly added cullet material to a molten glass stream in a top view,
Figures 4a and 4b show, in a top view and a side view, dimensional aspects of the melting and fining zone of the arrangement, respectively embodiment thereof,
Figure 5 schematically shows the arrangement of burners in the melting and fining zone, and
Figure 6 schematically shows the cooling zone of the arrangement of Fig. 1.

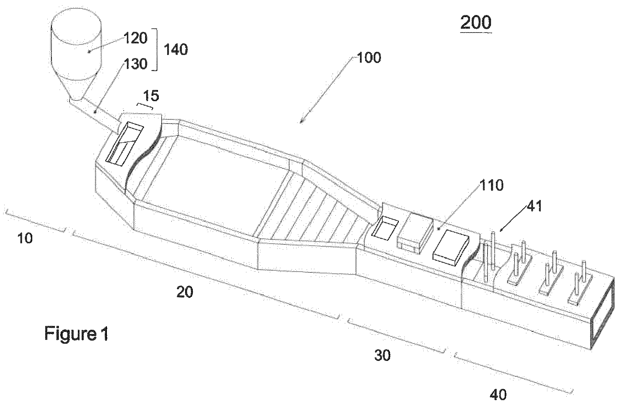

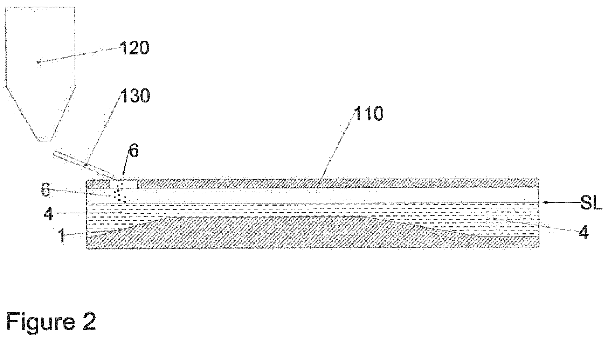

Fig. 1 shows in a schematical manner a perspective view of a glass stream flow arrangement 200. A feeder 100 acts as a channel for channeling a molten glass stream 4 (Fig. 2) from a working end side connected to a molten glass source, in particular a melting furnace (not shown) towards a spout end (not shown), where the molten glass stream reaches a forming arrangement suitable for manufacturing any kinds of goods made of glass in a way well known to the person skilled in the art of glass manufacturing. Also the final part of the feeder towards the forming side is not shown in Fig. 1, as such equalizing zone/spout is usually having geometrical shapes adapted to the available space and the use and coupling to the forming arrangement, and may be e.g. straight, in L-shape, T-shape, etc.

As one can recognize from Fig. 1, between an upstream channel portion 10 and a downstream channel portion 20 of the feeder 100, there is a cullet entry portion 15 with a cullet infeed to the molten glass stream. In the exemplified embodiment, the cullet entry portion 15 is provided by an opening in a lid 110 of feeder 100. A cullet feeding device 140 having a silo 120 and a cullet distributer 130 is arranged such that colored cullet material provided by cullet feeder device 140 fall down by gravity through the opening and into the molten glass stream 4.

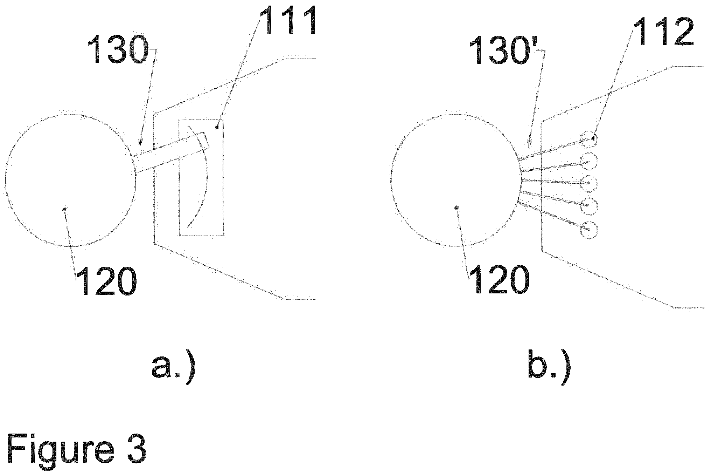

Construction and shape of the cullet distributor 130 is not particularly limited. For the embodiment shown in Fig. 1, the respective arrangement being, also shown in Fig. 3a in a top view, there is a pivotable cullet distributor being pivoted between one and the other side of the channel of the feeder at the cullet infeed portion 15, such as to distribute the cullet material roughly equally along the width W of the channel.

Another embodiment, shown in Fig. 3b has cullet distributor 130' in form of fixed chutes leading to single holes 112 in lid 110. The skilled person understands that there are several possibilities in order to provide cullet equally over the width of the channel.

What is important is that the cullet material 6 provided by cullet delivery device 140 provides the cullet in solid state, contrary to prior art arrangements where cullet reaches the molten glass stream in molten state. The temperature of the entering cullet material in solid state may be larger than room temperature, in particular by pre-warming f.i. cullet delivery device 140, but the cullet delivery may also be at room/ambient temperature.

Further, in the present embodiment, the cullet material 6 is colored cullet material. Moreover, in the exemplified embodiment, the cullet material is remaining cullet material resulting from this or other product lines of the same glass manufacturing plant. It is to be understood, however, that the cullet material could also include colorless cullet. However, colorless cullet in case of need of recycling thereof could also be added in the main furnace for providing molten glass stream 4. Moreover, the cullet material may come from external sources for recycling purpose.

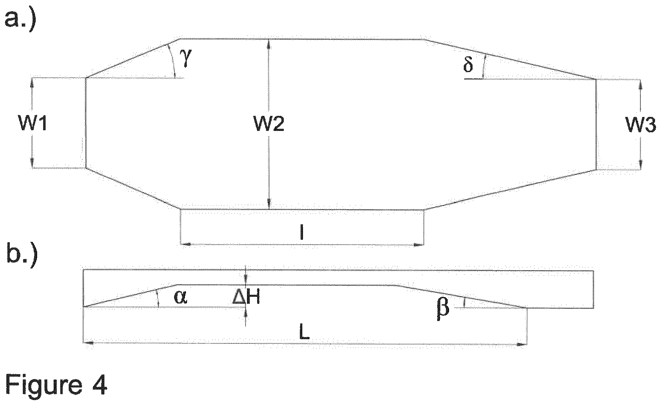

As can be seen from Fig. 1, and also from Fig. 2 and Fig. 4b, there is, in this embodiment, a highly smooth transition from a ground level H1 in the upstream channel portion to a ground level H2 being the maximum ground level in the downstream portion 20. The smooth continuous channel ground raising is, in this exemplified embodiment via a slope, in particular a linear ramp 1 having, in the exemplified embodiment an inclination α of about 14°. It is, however, understood that the transition to provide for the height difference ΔH=H2-H1 can be realized differently, that is in the form of preferably a plurality of steps or a slope with also non-constant inclination. Suitable slope angles are also given above.

A sharp step for providing the height difference ΔH in one single (90°-step) is avoided, as well as a very rapid channel ground raising with average inclination above 70°. The purpose of this channel ground raise is to force bubbles generated by said cullet material addition in the cullet infeed portion closer to the surface level SL (Fig. 2).

As one can further see in Fig. 1 and Fig. 4a, there is not only the channel ground raising but also a channel width increase ΔW=W2-W1 between the upstream channel portion 10 and the downstream channel portion 20.

This channel width increase is symmetrically versus both channel side walls and also realized via a slope (Fig. 4a) with inclination γ of, in this exemplified embodiment, 23°. Regarding the continuous smooth transfer also regarding the width increase, the above disclosure regarding the smooth transfer of the channel ground raising also apply. The broadening of the molten glass stream in width direction is, thereby, counteracting a flow velocity increase caused by the channel ground raising. Thereby, the dwelling time of the molten glass in the downstream portion 20 is increased with respect to otherwise unmodified (constant) channel width.

The downstream channel portion 20 provides for a melting and fining zone, for melting the added cullet material and for fining the resulting molten glass stream containing the added colored cullet material.

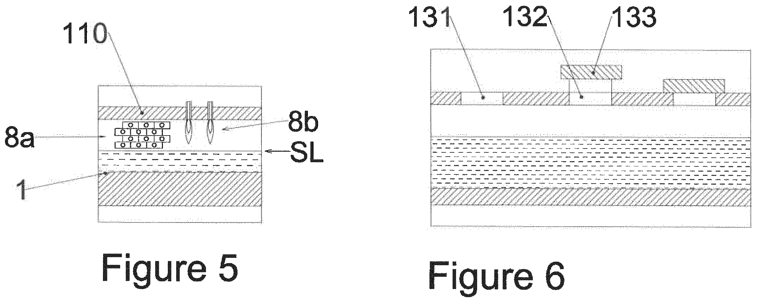

While part of the energy for melting the added cullet material is automatically taken from the molten glass stream itself, additional (and the main) heating energy is introduced via burner 8. As one can see in Fig. 5, burners 8a being horizontally arranged and reaching through a sidewall portion of feeder 100 in downstream channel portion 20 can be provided, and/or burner 8b from above, that is reaching through lid 110 of the feeder 100. In said melting and fining zone, additional devices to increase the fining quality can be provided, as generally known by the person skilled in the art of glass manufacturing, in particular gas bubblers, ultrasonic devices, and other means.

Before reaching a stirrer zone 40 with stirrer 41 for homogenizing the molten glass stream, in the exemplified embodiment a cooling zone 30 is provided. One reason for providing cooling zone 30 is that the heat provided by burners 8 to melt the added cullet material may also lead to a temperature level of the molten gas flow beyond a desired temperature intended versus the end of the feeder, such that decrease the power of available regular burner provided for maintaining a temperature level might not be sufficient to reach the desired temperatures, and with the desired temperatures also the desired surface level SL, such that active cooling is preferably provided.

As can be seen in the side-/cross-sectional view of Fig. 6 in more detail, the cooling zone has cooling means which may consist in just openings 131 or openings 132 which can be closed by lid portions 133. Thereby, the cooling rate is variable and can be controlled via the opening levels of openings 132.

In the stirring zone 40, one or more rows of stirrer 41 can be arranged, in the exemplified embodiment there are four rows of four stirrers 41 each.

As can be further seen in Fig. 1, in the exemplified embodiment, the channel width of both cooling zone and stirring zone is again reduced with respect to the maximum width W2 of the downstream channel portion 20. In the exemplified embodiment, W3 essentially coincides with the W1.

Also the ground level is lower than the ground level reached in the downstream channel portion 20. In the preferred embodiment, one turns back to the situation before the channel ground increase. As one can see in particular from Fig. 4a, said decreasing in width is smoother than the previous channel width increase (δ<γ). Further, as can be seen in particular from Fig. 4b, the channel ground sinking (β) may also be smoother (β<α) and extending over a larger distance in flow direction (channel length direction) than the previous channel ground raising. Moreover, the channel ground sinking starts earlier than the channel width decrease. Both channel ground sinking and channel width drop may end approximately at the same length level, as shown in Fig. 1 when reaching the cooling zone 30. However, the channel ground sinking may f.i. also terminate earlier (see comparison Fig. 4b to Fig. 4a). It is, however, understood that these details in the geometry for the channel ground raising and dropping as well as the channel width increase and decrease correspond to a preferred embodiment and can be varied, in particular within the ranges given above.

Not shown in the figures is a control of the feeder 100 including their adjustable/controllable sub-devices as f.i. burners 8, cooling units 132/133 and stirrer 41, respectively the cullet flow rate of cullet distributor 130 with respect to the volume flow rate of the molten glass stream in the channel upstream portion. In the subject embodiment, the control device is configured such as to keep the surface level SL (Fig. 4) in the feeder 100 on a pre-defined level.

It is understood that the invention is not limited to the detailed embodiment shown in the above figurative description. Rather, features of the previous description as well as of the subsequent claims may be, alone or in combination, relevant for the invention in its various embodiments.

## Claims

1. Method of adding cullet material (6) to a molten glass stream (4), wherein the molten glass stream is channeled and receives the added cullet material (6) after flowing through an upstream channel portion (10) with a set volume flow rate, the molten glass stream containing added cullet material flowing with a surface level through a downstream channel portion (20) towards its further processing,
**characterized in that**
the cullet material (6) is added in solid state when entering the molten glass stream (4), heating energy to contribute to the melting of the cullet material is input in the downstream channel portion, and a flow velocity increase caused by a raised channel ground (ΔH) in the downstream channel portion (20) with respect to the upstream channel portion (10), said raise being provided to force bubbles present in the molten glass stream closer to the surface level, is counteracted by a channel width increase (W2>W1) in the downstream channel portion with respect to the upstream channel portion.

2. Method according to claim 1, the raise (ΔH) being, with respect to the surface flow level over ground in the upstream portion, more than 12%, preferably more than 20%, in particular more than 28%.

3. Method according to claim 1 or 2, the crossover from the ground level (H1) of the upstream channel portion to the raised ground level is continuous, in particular by a ramp with average ramp angle not exceeding 40°, preferably not exceeding 34°, in particular not exceeding 28°.

4. Method according to any of the preceding claims, wherein the width increase is at least by 15%, preferably at least by 20%, in particular at least by 30%.

5. Method according to any of the preceding claims, wherein the channel width increase is continuous, preferably with average inclination of not larger than 50°, preferably not larger than 42°, in particular not larger than 34°.

6. Method according to any of the preceding claims, wherein the ratio l/Δh of the length (I) of the raised channel ground to the raise (ΔH) of channel ground is at least 8, preferably at least 12, in particular at least 16.

7. Method according to any of the preceding claims, a ratio w/l of the width (W2) and the length (L) of the downstream channel portion (20) is not larger than 48%, preferably not larger than 42%, in particular not larger than 36%.

8. Method according to any of the preceding claims, wherein the cullet material is added in a percentage of at least 2%, preferably at least 4%, in particular at least 10% to the molten glass stream, and/or of not more than 40%, preferably not more than 36%, in particular not more than 33%.

9. Method according to any of the preceding claims, wherein a combustion space of a first heating arrangement to contribute to the melting of the solid state cullet material in the downstream per burner is larger than 0.001 m³, preferably larger than 0.005 m³, in particular larger than 0.04 m³ and/or lower than 0.1 m³, preferably lower than 0.8 m³, in particular lower than 0.6 m³, and the temperature in the combustion zone is in particular higher than 1200°, preferably higher than 1240°, in particular higher than 1280°, and/or wherein a second heating system is provided, extending in particular also in the upstream channel portion, for temperature control of the molten glass stream.

10. Method according to any of the preceding claims, wherein, by in particular including control parameter of one or more of the group relative cullet addition, first heating system, cooling system, second heating system, the surface level in the downstream channel portion is controlled to a defined target surface level, in particular including feedback control.

11. Method according to any of the preceding claims, wherein the molten glass stream goes through a stirring zone (40) in a stirring channel portion downstream the downstream channel portion, and preferably through a cooling zone (30) upstream the stirring zone (40).

12. Method according to any of the preceding claims, wherein the grain size of cullet particles of the cullet material is below 100 mm, preferably below 50 mm in particular below 30 mm, and/or larger than 0.3 mm, more preferable larger than 1 mm, in particular larger than 1.5 mm.

13. Method according to any of the preceding claims, wherein the residence time of a volume element of the molten glass stream in the melting and fining zone is 50 min or more, preferably 60 min or more, more preferably 70 min or more, in particular 80 min or more, and/or 110 min or less, preferably 100 min or less.

14. Molten glass stream feeder (100) having a geometry providing the cullet material access to channel, the raised channel ground and the channel width increase of the method according to any of the preceding claims.

15. Glass manufacturing system having a molten glass stream feeder, a melting furnace coupled to the upstream channel portion of the feeder, a cullet material delivery device (200) for providing cullet material in solid state form, the feeder according to claim 14, and a control to control the system to perform a method according to any of claims 1 to 13.
